# EUROPEAN PATENT APPLICATION

(11) **EP 1 825 831 A1**
(43) Date of publication of application: **29.08.2007**
(21) Application number: 07250801.3
(22) Date of filing: 26.02.2007
(51) Int. Cl.: A61C 15/04

(54) **Floss grip**

(30) Priority: 24.02.2006 AU 2006900927
(71) Applicant: Pitsis, Andrew J., Sydney, New South Wales 2000 (AU)
(72) Inventor: Pitsis, Andrew J., Sydney, New South Wales 2000 (AU)
(74) Representative: Coles, Graham Frederick

(57) **Abstract**

A floss grip involves a shaft (11;23;30;40;50;63) having a bore (14;24;69) into which a stem (15;21;61) is screwed, resiliently retained by a spring (22) or is an interference push-fit. An opening (17;25,26;65) in the stem (15;21;61) receives one end of a strand (36) of dental floss to trap it under a head (16:26) of the fully-inserted stem (15;21) so as to grip it for flossing. The shaft (11;23;30;40;50) fits under the arch wire (32) of a user's orthodontic brace (Figs 3;4) to allow full depth cleaning of the interdental gap with the user holding the shaft and the other end of the floss-strand.

## Description

This invention relates to dental hygiene and more particularly to a form of floss grip that can be used for gripping dental floss conveniently.

Orthodontic braces consist of a metal or ceramic bracket attached to each tooth as well as an arch wire that runs from bracket to bracket. The braces exert a constant pressure on the teeth which over time moves teeth into their proper positions. Dental flossing is considered part of a good oral hygiene regime. Cleaning between the teeth once or twice a day with dental floss removes plaque from between the teeth in areas where a tooth brush cannot reach. Flossing is considered essential in preventing periodontal (gum) disease and decay.

Conventional flossing involves, for example, breaking off about 18 inches (457mm) of floss and winding most of it around one of the middle fingers. The remaining floss is wound around the same finger of the opposite hand. The floss is held tightly between the thumbs and forefingers and guided between the teeth with a general rubbing motion. But there is the problem that satisfactory flossing is not possible for a person wearing a dental brace, since the presence of the arch wire prevents the floss from reaching the entire interdental gap.

It is an object of the present invention to provide a floss grip by which the above problem may be overcome.

According to the invention a floss grip comprises: a shaft having a distal end and an open end, the open end leading into an internal bore; a stem received by the internal bore and having a head adapted to limit travel of the stem relative to the shaft; and wherein the stem has an opening located adjacent the head.

The floss grip according to the invention is adapted to be inserted between the teeth and the arch wire of a brace, with one end of a strand of floss gripped by clamping or trapping in the opening of the stem. The user can then hold the shaft with one hand and the other end of the strand with the other for flossing throughout the entire interdental gap.

In this regard the invention may be characterised as providing a floss grip wherein one end of a stem is entered into an internal bore of an elongate shaft and a head at the other end of the stem limits the extent to which the stem is receivable within the bore, and wherein the stem has an opening for receiving an end of a length of dental floss and gripping it by trapping it under the head of the stem.

Examples of floss grips in accordance with the invention will now be described with reference to the accompanying drawings, in which:
Figure 1 is a cross-section through a first example of floss grip according to the present invention;
Figure 2 is a cross-section through a second embodiment of floss grip according to the present invention;
Figure 3 is illustrative of use of a third example of floss grip according to the invention;
Figure 4 is illustrative of use of a fourth embodiment of floss grip according to the invention;
Figure 5 shows a fifth example of floss grip according to the invention; and
Figure 6 is an exploded cross-sectional view of part of a sixth example of floss grip according to the invention.

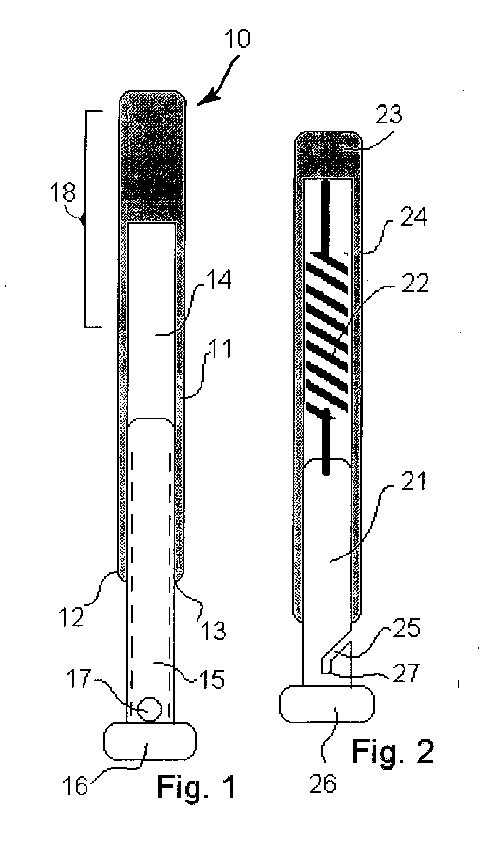

As shown in Figure 1, a floss grip in the form of a gripping device 10 comprises a shaft 11 that is open at one end 12. The opening 13 at that end leads into an internal bore 14; in this example, the bore 14 is closed at one end but optionally, it may be open at both ends. The bore 14 is internally threaded and receives a cooperating threaded stem 15. The stem 15 is shorter than the length of the bore 14 so that it is capable of being screw-threaded into the bore to the point where a head 16 formed at one end of the stem 15 comes into contact with the open end 12 of the gripping device 10. The head 16, which may be smaller than, equal to, or larger than the shaft in size, limits the travel of the stem 15 relative to the shaft 11. In preferred embodiments, the head 16 is slightly larger in diameter than the shaft 11. This allows the stem 15 to be conveniently threaded completely into the bore 14 and subsequently removed by rotation in the opposite direction. An opening 17 is provided through the stem 15 adjacent to the head 16. The opening 17 is suitably sized to receive a strand of dental floss.

The device depicted in Figure 1 is used by inserting one end of a strand of dental floss through the opening 17. The head 16 is then gripped while the shaft 11 is advanced toward the head 16 by rotating it. As the open end 12 makes contact with the head 16 the strand of floss is captured or clamped between the end of the shaft 12 and the head 16 of the stem. In preferred embodiments, at least an upper portion 18 of the shaft 11 is provided with gripping features such as a physical texture, knurling or the like. In this example, the maximum diameter of the device (including the head 16) is between as little as 0.5mm and 2.5mm, preferably about 2mm. This allows the device to be located between a user's teeth and brace arch-wire.

Figure 2 illustrates an alternative embodiment having a stem 21 that is retained by a tension spring or other bias 22 that biases the stem 21 toward the distal end 23 of the device. The tension spring 22 extends between one end of the bore of the shaft 24 and the stem 21. In this way the threaded engagement between the shaft 24 and the stem 21 is avoided, and a slot 25 adjacent the head 26 takes the place of the through-opening 17 depicted in Figure 1. The slot 25 is angled toward the head 26 and terminates in a retaining pocket 27 that assists in trapping the floss when the tensioning device 22 draws the head 26 into contact with the lower end of the shaft 24.

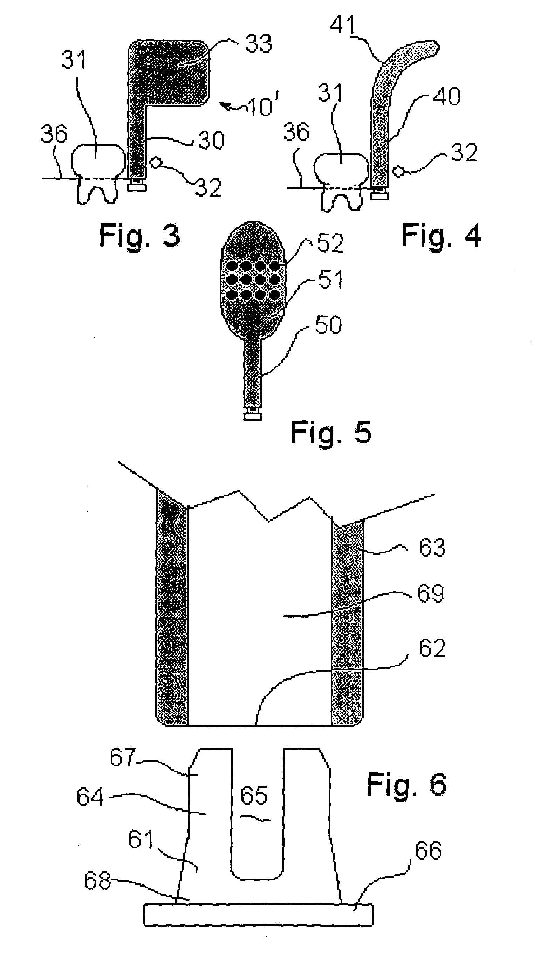

As shown in Figure 3, the shaft 30 of the floss device 10' in this case, is adapted to fit between a user's teeth 31 and the arch wire 32 of the brace, and one end of the shaft 30 is expanded into a gripping portion 33. In this example, the gripping portion 33 is asymmetrical with respect to the shaft 30 and provides an enlarged area that can be gripped between the thumb and forefinger of the user. It is to be noted that the floss 36 can enter the interdental space below the level of the arch wire 32.

In the example depicted in Figure 4, the shaft 40 includes a bent or curved portion 41, and in the example of Figure 5, the shaft 50 terminates in a flat paddle-like gripping portion 51 with optional gripping texture 52 applied to one or both sides of the gripping area 51. It will be appreciated that a wide variety of gripping area types and shaft configurations are contemplated as being within the scope of the present invention.

As shown in Figure 6, the strand of dental floss may be retained by a press-fit or frictional-type clamping fastener 61 that fits into the open end 62 of the shaft 63. In this example, the fastener 61 has a stem body 64 which has a floss-retaining slot 65, and a head 66. In preferred embodiments, the head 66 is slightly larger in diameter than the diameter of the shaft 63, and the body 64 includes a generally cylindrical portion 67 that tapers outward, increasing slightly in diameter toward its base 68. In this way, the body 64 enters the bore 69 easily but creates an interference fit between the fastener 61 and the shaft 63 the further the fastener is introduced into the bore 69.

While the present invention has been disclosed with reference to various details of construction, these will be understood as having been provided by way of example and not as limitations to the scope or spirit of the invention. In particular, the retention of the dental floss has been disclosed with reference to a variety of different clamping mechanisms. These mechanisms should be considered as being interchangeable with respect to the various shaft styles and gripping portions disclosed. Further, the particular gripping styles have been provided as particularised examples and should not be considered exhaustive of the types of gripping styles that would be useful in conjunction with the device disclosed herein. It will also be appreciated that although the diameter of the device is limited practically by the requirement that it fits between the tooth and the arch wire, the length of the device is only limited by practicality and user convenience.

The floss grip of the invention is of especial advantage for a user fitted with a dental brace, but is also of advantage where no brace is involved.

## Claims

1. A floss grip comprising: a shaft having a distal end and an open end, the open end leading into an internal bore; a stem received by the internal bore and having a head adapted to limit travel of the stem relative to the shaft; and wherein the stem has an opening located adjacent the head.

2. A floss grip wherein one end of a stem is entered into an internal bore of an elongate shaft and a head at the other end of the stem limits the extent to which the stem is receivable within the bore, and wherein the stem has an opening for receiving an end of a length of dental floss and gripping it by trapping it under the head of the stem.

3. A floss grip according to Claim 1 or Claim 2 having a maximum diameter of between 1.5mm and 2.5mm.

4. A floss grip according to Claim 3 having maximum diameter of 2 mm.

5. A floss grip according to any one of Claims 1 to 4 wherein the head has a diameter larger than that of the shaft.

6. A floss grip according to any one of Claims 1 to 5 wherein the stem and shaft have cooperating threads.

7. A floss grip according to Claim 6 wherein the opening in the stem is an opening through the stem for insertion of a strand of dental floss.

8. A floss grip according to any one of Claims 1 to 5 further comprising a tensioning device located in the bore of the shaft to bias the stem into the bore.

9. A floss grip according to Claim 8 wherein the tensioning device is a tension spring.

10. A floss grip according to Claim 8 or Claim 9 wherein the opening in the stem is a slot that is angled towards the head.

11. A floss grip according to Claim 10 wherein the slot terminates in a retaining pocket adapted to assist in trapping the floss.

12. A floss grip according to any one of Claims 1 to 11 wherein the shaft has a portion for gripping by the fingers.

13. A floss grip according to Claim 12 wherein the finger-gripping portion is a portion asymmetrical with respect to the shaft.

14. A floss grip according to Claim 12 wherein the finger-gripping portion is a curved extension from the shaft.

15. A floss grip according to any one of Claims 12 to 14 wherein the finger-gripping portion has a textured area for enhancing grip by the fingers.

16. A floss grip according to any one of Claims 12 to 15, wherein the finger-gripping portion is flat.

17. A floss grip comprising: a shaft having a distal end and an open end, the open end leading into an internal bore; and a fastener that fits into the open end of the shaft, the fastener comprising a body having a slot therein for grip-retention of an element of dental floss when fitted into the open end of the shaft as aforesaid.

18. A floss grip according to Claim 17 wherein the body incorporates a head, a diameter of the head being larger than a diameter of the shaft.

19. A floss grip according to Claim 17 or Claim 18 wherein the body includes a generally-cylindrical, tapered portion for interference fit within the open end of the bore.
